# NEUE EUROPÄISCHE PATENTSCHRIFT

(11) **EP 4 082 880 B2**
(45) Veröffentlichungstag und Bekanntmachung des Hinweises auf die Entscheidung über den Einspruch: **01.07.2026**
(45) Hinweis auf die Patenterteilung: 31.01.2024
(21) Anmeldenummer: 22020184.2
(22) Anmeldetag: 21.04.2022
(51) Int. Cl.: B62J 45/411, B62M 6/50, B62J 45/421, B62M 6/55

(54) **ELEKTRISCHE FAHRRAD-ANTRIEBSEINHEIT MIT DRENMOMENTMESSEINRICHTUNG**
ELECTRIC BICYCLE DRIVE UNIT WITH TORQUE MEASURING DEVICE
UNITÉ D'ENTRAÎNEMENT DE BICYCLETTE ÉLECTRIQUE POURVU DE DISPOSITIF DE DÉTECTION DE COUPLE

(30) Priorität: 21.04.2021 DE 102021002093; 19.04.2022 DE 102022109482
(43) Veröffentlichungstag der Anmeldung: 02.11.2022
(73) Patentinhaber: SRAM Deutschland GmbH, 97424 Schweinfurt (DE)
(72) Erfinder: Heyna, Sebastian, 97456 Dittelbrunn-OT Hambach (DE); Braedt, Henrik, 97456 Dittelbrunn-OT Hambach (DE)
(74) Vertreter: Thum, Bernhard

(56) Entgegenhaltungen:
- EP-A1- 3 646 836
- EP-B1- 2 216 242
- WO-A1-2021/190844
- DE-A1- 102012 221 548
- DE-A1- 102016 120 544
- DE-A1- 102016 123 095
- DE-B4- 102013 211 436

## Beschreibung

Die Erfindung betrifft eine elektrische Fahrrad-Antriebseinheit nach dem Oberbegriff von Patentanspruch 1.

In der nachfolgenden Beschreibung stellenweise verwendete Orts- bzw. Richtungsangaben wie "links", "rechts", "vorne", "hinten", "oben", "unten" usw. entsprechen der Fahrerperspektive auf einem Fahrrad.

Geländegängige Fahrräder mit elektrischem Unterstützungsantrieb erfreuen sich zunehmender Beliebtheit. Diese auch als E-Mountainbike oder abgekürzt E-MTB bezeichneten Fahrräder werden in Kategorien wie beispielsweise "Cross-Country", "Trail", "Enduro" und "Downhill" eingeteilt bzw. auch sportlich eingesetzt.

Bei solchen Einsätzen treten hohe Anforderungen an Robustheit, Rahmensteifigkeit und "Handling" des E-MTB auf. Beim Handling des E-MTB ist vor allem die Schwerpunktlage des Fahrrads von Bedeutung. Ein hoher Schwerpunkt des Fahrrads beeinträchtigt die Kurvenlage und erhöht das Risiko von Überschlägen bei starker Bremsverzögerung oder in steilen Abfahrtspassagen.

Von besonderer Bedeutung ist auch die Distanz zwischen dem Fahrrad-Schwerpunkt und der Hinterradachse. Je weiter sich der Schwerpunkt des Fahrrads in Fahrtrichtung vorne befindet, desto höher ist die Gefahr von Überschlägen, und desto schwieriger wird es für den Fahrer, das Vorderrad anzuheben, insbesondere in Fällen ohne Unterstützung eines Antriebsdrehmoments.

Das Anheben des Vorderrades ist eine der wichtigsten Fahrtechniken, die in den unterschiedlichsten Fahrsituationen angewandt wird. Auf diese Weise lassen sich größere Hindernisse und Stufen überwinden, oder mit hoher Geschwindigkeit Bodenwellen überfahren.

Weiterhin ist bei E-Mountainbikes der Abstand zwischen Hinterradachse und Tretlagerwelle im Vergleich zum Mountainbike ohne Zusatzantrieb tendenziell vergrößert, da der Elektromotor auch Bauraum im Bereich der Tretlagerwelle einnimmt, und da dort somit weniger radialer Freiraum für den Hinterradreifen zur Verfügung steht.

Bei vollgefederten Fahrrädern wird durch den elektrischen Zusatzantrieb auch der Bauraum für die aus Stabilitätsgründen üblicherweise erforderliche Brücke zwischen den Kettenstreben des Hinterbaurahmens im Bereich des Tretlagers beeinträchtigt. In Abhängigkeit von der für die Hinterradfederung verwendeten Hinterbaukinematik kann auch ein Bauraumkonflikt mit im Tretlagerbereich angeordneten Drehgelenken der Hinterradfederung entstehen.

Weiterhin benötigen E-Mountainbikes, allgemeiner gefasst auch sonstige Fahrradmodelle mit den Fahrer unterstützendem elektrischem Zusatzantrieb, im Markt auch bezeichnet als Pedelecs, zur Motorsteuerung die Erfassung der Eingangsleistung des Fahrers. Der Motor soll die Leistung des Fahrers mit einem entsprechenden Multiplikator lediglich unterstützen. Aus gesetzlichen ebenso wie aus Sicherheitsgründen soll der Elektromotor ohne vom Fahrer über die Pedale aufgebrachtes Drehmoment nicht antreibend wirken.

Für E-Mountainbikes ist eine schnelle und akkurate Messung des vom Fahrer aufgebrachten Drehmoments von besonderer Bedeutung, da viele Fahrsituationen im Gelände eine schnelle Reaktionszeit und gute Dosierbarkeit des Antriebs erfordern.

Im Markt haben sich hierzu im Wesentlichen die Drehmomentmessung über Dehnmesstreifen und die berührungslose magnetostriktive Drehmomentmessung etabliert. Um bei der Messung mit Dehnmesstreifen, welche an einer vom Drehmoment durchflossenen, rotierenden Welle erfolgt, die Notwendigkeit von Schleifkontakten zu vermeiden, wird die Energieversorgung des Dehnmessstreifen-Sensors zumeist induktiv realisiert, die Signalübertragung vom Sensor auf die Auswerteelektronik erfolgt dann ebenfalls drahtlos.

Bei den nicht konzentrisch zur Tretlagerwelle aufgebauten Mittelmotoren, die den E-Mountainbike-Markt aktuell zum größten Teil dominieren, wird das Drehmoment des Elektromotors von einer zur Tretlagerwelle parallelen Motorwelle auf die Ausgangshohlwelle der Antriebseinheit und damit auf das Kettenrad des Fahrrad-Antriebsstrangs übertragen. Diese Drehmomentübertragung vom Elektromotor auf die Ausgangshohlwelle erfolgt häufig mittels eines Stirnradgetriebes oder über einen Zahnriemen. Bei einem solchen Aufbau kann eine Einrichtung zur Drehmomentmessung auf einfache Weise so in der Antriebseinheit platziert werden, dass unabhängig vom aktuellen Motordrehmoment nur das vom Fahrer aufgebrachte Drehmoment gemessen wird.

Hierzu wird das Motordrehmoment zwischen dem Bereich der Fahrer-Drehmomentmessung und einem Kettenblattanschlussbereich, bezüglich des Momentflusses also stromabwärts von der Fahrer-Drehmomentmessung, in die Ausgangshohlwelle eingeleitet, wodurch die Fahrer-Drehmomentmessung nicht durch das Motordrehmoment verfälscht wird.

Nachteilig bei derartigen, nicht konzentrisch aufgebauten Mittelmotor-Antriebseinheiten ist, dass die Antriebseinheit zumindest in einer Richtung eine große Ausdehnung senkrecht zur Motorachse bzw. zur Tretlagerwelle aufweist. Auch die Ausdehnung in Richtung der Motorachse bzw. Tretlagerwelle ist erheblich, da Untersetzungsgetriebe bzw. Übertragungsgetriebe zur Tretlagerwelle Bauraum zusätzlich zur Breite des Motors beanspruchen. Daraus resultiert eine zumeist wenig kompakte und oft zerklüftete Antriebseinheit. Damit ist eine optimale Integration der Antriebseinheit in den Fahrradrahmen schwer zu realisieren.

Konzentrisch zur Tretlagerwelle angeordnete Mittelmotor-Antriebseinheiten können kompakter gestaltet und damit besser in den Fahrradrahmen integriert werden. Ein Beispiel für eine Antriebseinheit dieser Bauart ist in Fachkreisen unter der Bezeichnung TQ HPR 120s, sowie aus der Druckschrift DE202014010823U1 (nachfolgend als DE'823 abgekürzt) bekannt. Trotz der sehr kompakten Bauart erreicht dieser Mittelmotor jedoch noch Abmessungen, die eine Integration in moderne E-Mountainbikes teilweise erschweren. Insbesondere ist der Außendurchmesser des Antriebsgehäuses dieser Antriebseinheit mit ca. 140 mm teilweise problematisch, da ein Gehäusedurchmesser dieser Größe zu Bauraumkonflikten bei Fahrradrahmen mit kurzer Kettenstrebenlänge (insbesondere 470 mm und weniger) sowie bei gängigen Radgrößen (27,5 Zoll bzw. 29 Zoll) führen kann.

Um genügend radialen Freiraum für das Hinterrad zu gewährleisten, sollte der Außendurchmesser eines konzentrisch zur Tretlagerwelle aufgebauten Mittelmotors idealerweise nicht mehr als 100 mm betragen. Ein zu großer Außendurchmesser des Mittelmotors kann auch die Positionierung der für die Eigenschaften der Hinterbaufederung wichtigen, tretlagernahen Drehpunkte an gefederten Fahrradrahmen erschweren.

Bei der vorgenannten, bekannten konzentrischen Antriebseinheit leistet die Einrichtung zur Messung des Fahrer-Drehmoments einen wesentlichen Beitrag zu dem relativ großen Gehäusedurchmesser. Diese bekannte konzentrische Antriebseinheit verwendet eine beispielsweise von der NCTE AG bereitgestellte Sensor-Einheit zur magnetostriktiven Messung des Fahrer-Drehmoments. Bei dieser Sensoreinheit wird das Fahrer-Drehmoment an einer eigens zur Messung vorgesehenen, die Tretlagerwelle umschließenden Torsions-Messhohlwelle gemessen.

Hierzu ist die Torsions-Messhohlwelle an ihrem einen axialen Ende drehmomentfest mit der Tretlagerwelle verbunden. An ihrem anderen axialen Ende ist die Torsions-Messhohlwelle rotatorisch relativ zur Tretlagerwelle frei, jedoch drehrichtungsgebunden über einen Freilauf mit einer Ausgangshohlwelle der Antriebseinheit verbunden.

Mit dieser bekannten Anordnung kann das vom Fahrer auf beide Pedale bzw. Kurbelarme aufgebrachte Drehmoment isoliert vom Motor-Drehmoment und von etwaigen Biegemomenten gemessen werden. Wie bereits eingangs erwähnt, wird das Motordrehmoment bei dieser Antriebseinheit bezüglich des Momentflusses erst stromabwärts von der Drehmomentmessung in die Ausgangshohlwelle der Antriebseinheit eingeleitet. Die Einrichtung zur Drehmomentmessung befindet sich in diesem Fall radial innerhalb von Motor und Getriebe.

Diese bekannte Anordnung zur Messung des Fahrer-Drehmoments führt jedoch, insbesondere aufgrund der eigens zur Messung zusätzlich erforderlichen Torsions-Messhohlwelle, zu einem vergleichsweise großen Gesamtdurchmesser der Antriebseinheit. Aufgrund des damit ebenfalls vergrößerten Durchmessers einer Mehrzahl von Baugruppen der Antriebseinheit, darunter vergrößerte Wellendurchmesser und entsprechend große Lagerdurchmesser, ergibt sich ein entsprechend deutlich erhöhtes Gewicht der Antriebseinheit. Schließlich ist auch die Kabelführung von der Drehmoment-Messeinrichtung zum elektronischen Motorcontroller bei dieser Antriebseinheit tendenziell aufwändig und damit teilweise problematisch. Eine weitere gattungsgemäße Anordnung ist in der DE 10 2016 120 544 A1 gezeigt.

Ausgehend von diesem Stand der Technik ist es die Aufgabe der vorliegenden Erfindung, eine elektrische Fahrrad-Antriebseinheit bereitzustellen, mit der sich die vorstehend beschriebenen Nachteile überwinden lassen. Insbesondere soll eine Messung des Fahrer-Drehmoments bei einem konzentrisch zum Tretlager aufgebauten Fahrrad-Mittelmotor möglich gemacht werden, die eine geringere radiale Baugröße der Antriebseinheit erlaubt. Diese Aufgabe wird durch eine elektrische Fahrrad-Antriebseinheit zur tretlager-koaxialen Anordnung in einem Tretlagerbereich eines Fahrradrahmens mit den Merkmalen von Patentanspruch 1 gelöst. Bevorzugte Ausführungsformen sind Gegenstand der Unteransprüche.

Gattungsgemäß umfasst die Antriebseinheit eine Drehmoment-Sensoreinrichtung zur Messung eines aus einem linksseitigen Fahrer-Drehmoment und einem rechtsseitigen Fahrer-Drehmoment bestehenden Fahrer-Summendrehmoments, eine Tretlagerwelle, eine koaxial zur Tretlagerwelle angeordnete elektrische Motoreinrichtung, eine Ausgangshohlwelle zur Übertragung des Motordrehmoments und des Fahrer-Drehmoments auf einen Fahrrad-Antriebsstrang, sowie eine Fahrermoment-Einkopplungseinrichtung zur Einkopplung des Fahrer-Drehmoments von der Tretlagerwelle auf die Ausgangshohlwelle und eine Motormoment-Einkopplungseinrichtung zur Einkopplung des Motor-Drehmoments ebenfalls auf die Ausgangshohlwelle.

Bei den Einkopplungseinrichtungen für das Fahrer-Drehmoment bzw. für das Motordrehmoment handelt es sich üblicherweise jeweils um Freiläufe, beispielsweise Klemmkörperfreiläufe. Für spezifische Einsatzzwecke sind jedoch auch rotatorisch in beide Richtungen starre Einkopplungseinrichtungen oder geschaltete Kupplungen denkbar.

Je nach Ausführung des Elektromotors umfasst eine gattungsgemäße Antriebseinheit zumeist auch ein Untersetzungsgetriebe zur Übertragung des unterstützenden Motordrehmoments auf die Tretlagerwelle, wobei jedoch auch getriebelose Antriebseinheiten zum Direktantrieb der Tretlagerwelle bekannt sind.

Erfindungsgemäß zeichnet sich die Antriebseinheit dadurch aus, dass die Drehmoment-Sensoreinrichtung in einem axialen Bereich der Antriebseinheit angeordnet ist, welcher von einem Abschnitt der Ausgangshohlwelle definiert und von der Ausgangshohlwelle durchgriffen wird, wobei der axiale Bereich im Betrieb der Antriebseinheit sowohl von dem gesamten Fahrer-Summendrehmoment als auch von dem gesamten Motordrehmoment durchflossen wird.

Dies bedeutet mit anderen Worten, dass die Messung des Fahrer-Drehmoments dank der Erfindung an der Ausgangshohlwelle erfolgen kann. Diese aus dem Stand der Technik für nicht konzentrische Mittelmotoren bekannte Positionierung der Fahrer-Drehmomentmessung war bisher nicht für gattungsgemäße, Tretlager-konzentrisch ausgebildete Antriebseinheiten anwendbar, da eine Motor- bzw. Getriebeabtriebshohlwelle dort aus Gründen der Geometrie grundsätzlich die Ausgangshohlwelle der Antriebseinheit umschließt, zumindest in demjenigen Bereich, in welchem lediglich das Fahrer-Drehmoment und noch nicht das Motor-Drehmoment auf die Ausgangshohlwelle wirkt. Der direkte Zugriff auf die das zu messende Fahrer-Drehmoment führende Welle war daher bisher nicht möglich.

Gemäß der Erfindung ist die Fahrermoment-Einkopplungseinrichtung in dem axialen Bereich sowie radial innerhalb der Ausgangshohlwelle angeordnet. Dabei ist die Drehmoment-Sensoreinrichtung zur Erfassung einer Durchmesseränderung oder einer Umfangsspannung der Ausgangshohlwelle in dem Ausgangshohlwellenabschnitt und/oder einer Durchmesseränderung oder Umfangsspannung der Fahrermoment-Einkopplungseinrichtung im Bereich des Ausgangshohlwellenabschnitts eingerichtet.

Hierzu können beispielsweise mitrotierende Dehnmessstreifen auf einem Außendurchmesser der Ausgangshohlwelle im Bereich des Ausgangshohlwellenabschnitts angeordnet werden, oder die Messung kann durch magnetostriktive oder magnetoelastische Ermittlung der Umfangsspannung der Ausgangshohlwelle, also der Materialspannung in Umfangsrichtung der Ausgangshohlwelle erfolgen. Für den Fall dass, anstelle einer Durchmesseränderung oder Umfangsspannung der Ausgangshohlwelle, durch die Ausgangshohlwelle hindurch eine Durchmesseränderung oder Umfangsspannung der Fahrermoment-Einkopplungseinrichtung ermittelt werden soll, kann hierzu die Ausgangshohlwelle zumindest in dem Ausgangshohlwellenabschnitt aus einem für magnetische Feldlinien bzw. Magnetfelder durchlässigen Material, beispielsweise aus Aluminium, und insbesondere dünnwandig ausgebildet sein.

Diese Ausführungsform macht sich zunutze, dass sich die Fahrermoment-Einkopplungseinrichtung, insbesondere wenn diese als Freilauf, beispielsweise als Klemmrollenfreilauf oder allgemeiner als Klemmkörperfreilauf ausgebildet ist, bei Beaufschlagung durch das Fahrer-Drehmoment radial elastisch aufweitet, wobei diese Aufweitung sich auch dem Ausgangshohlwellenabschnitt mitteilt, innerhalb welchem sich die Fahrermoment-Einkopplungseinrichtung befindet. Diese radiale elastische Aufweitung sowie die damit verbundene Durchmesservergrößerung führt zu Materialspannungen in Umfangsrichtung in der Fahrermoment-Einkopplungseinrichtung sowie in dem Ausgangshohlwellenabschnitt.

Diese in Umfangsrichtung verlaufenden Materialspannungen werden in dem Ausgangshohlwellenabschnitt zwar von Scherspannungen überlagert, welche durch das Motordrehmoment hervorgerufen sind. Aufgrund des physikalischen Superpositionsprinzips beeinflussen sich die in Umfangsrichtung verlaufenden Zugspannungen und die Scherspannungen gegenseitig jedoch nicht, zumindest nicht in erster Ordnung bzw. Näherung, sondern sind voneinander unabhängig. Auf diese Weise ist es also möglich, das Fahrer-Summendrehmoment in dem Ausgangshohlwellenabschnitt unabhängig vom Motordrehmoment zu messen.

Nach einer weiteren bevorzugten Ausführungsform der Erfindung umfasst die Antriebseinheit eine zwischen der Motoreinrichtung und der Motormoment-Einkopplungseinrichtung angeordnete Getriebe- bzw. Motor-Abtriebshohlwelle, welche in dem axialen Bereich koaxial zu dem Ausgangshohlwellenabschnitt sowie radial außerhalb des Ausgangshohlwellenabschnitts angeordnet und für Magnetfelder durchlässig ausgebildet ist, wobei die Drehmoment-Sensoreinrichtung zur berührungslosen Erfassung des Fahrer-Summendrehmoments in dem Ausgangshohlwellenabschnitteingerichtet ist. Für eine möglichst genaue Messung des Fahrer-Summendrehmoments ist dabei die Motor-Abtriebshohlwelle in dem axialen Bereich vorzugsweise zudem möglichst dünnwandig ausgebildet.

Bei dieser Ausführungsform wird somit das Motordrehmoment separat von dem Fahrer-Drehmoment durch den axialen Bereich hindurchgeleitet, und zwar mittels der Motor-Abtriebshohlwelle, und das Fahrer-Drehmoment wird durch berührungslose Messung der Materialspannungen in dem Ausgangshohlwellenabschnitt durch die Motor-Abtriebshohlwelle hindurch ermittelt.

Die Messung der Materialspannungen in dem Ausgangshohlwellenabschnitt kann dabei entweder durch eine berührungslos ausgebildete Dehnmessstreifen-Anordnung oder durch berührungslose magnetostriktive Messung erfolgen.

Gemäß einer weiteren Ausführungsform erfolgt die Messung des Fahrer-Summendrehmoments durch Differenzbildung aus einem von der Drehmoment-Sensoreinrichtung in dem Ausgangshohlwellenabschnitt gemessenen Gesamtdrehmoment und dem Motordrehmoment. Das Motordrehmoment kann dabei separat im Motor gemessen werden. Vorzugsweise wird das Motordrehmoment jedoch auf Basis der vom Motor aufgenommenen elektrischen Stromstärke bzw. Leistung errechnet und sodann vom gemessenen Gesamtdrehmoment subtrahiert.

Die Erfindung ist prinzipiell unabhängig von der konstruktiven Ausbildung der Motoreinrichtung, also unabhängig von der Art des Elektromotors sowie unabhängig von einem in der Motoreinrichtung ggf. enthaltenen Untersetzungsgetriebe sowie von dessen konstruktiver Gestaltung.

Gemäß einer weiteren Ausführungsform der Erfindung ist bevorzugt vorgesehen, dass die Motoreinrichtung eine Zykloidgetriebeeinrichtung oder Dehnwellengetriebeeinrichtung, letztere auch als Harmonic Drive bekannt, umfasst. Derartige Getriebeeinrichtungen haben insbesondere den Vorteil, sehr hohe Übersetzungsverhältnisse in nur einer Getriebestufe zu realisieren, bei gleichzeitig äußerst kompakten Abmessungen und hoher Drehmomentbelastbarkeit.

Nachfolgend werden Ausführungsformen der Erfindung anhand der Figuren beispielhaft beschrieben.

Es zeigt:
- Fig. 1:: ein E-Mountainbike nach dem Stand der Technik in einer antriebsseitigen Seitenansicht;
- Fig. 2:: in einer Fig. 1 entsprechenden Ansicht und in schematisierter Darstellung ein E-Mountainbike mit einer Ausführungsform einer Antriebseinheit nach der vorliegenden Offenbarung;
- Fig. 3:: in höchst schematisierter Darstellung das Wirkprinzip einer aus dem Stand der Technik bekannten Tretlager-koaxialen Antriebseinheit im Längsschnitt;
- Fig. 4:: in einer Fig. 3 entsprechenden, schematischen Darstellung ein Wirkprinzip einer Antriebseinheit nach der vorliegenden Offenbarung ähnlich den nachstehenden ersten und fünften Ausführungsformen;
- Fig. 5:: eine erste Ausführungsform in geschnittener perspektivischer Explosionsdarstellung;
- Fig. 6:: die Ausführungsform gemäß Fig. 5 im Längsschnitt;
- Fig. 7:: eine zweite Ausführungsform im Längsschnitt;
- Fig. 8:: eine dritte Ausführungsform im Längsschnitt; und
- Fig.9A-9C:: eine vierte Ausführungsform im Längsschnitt.

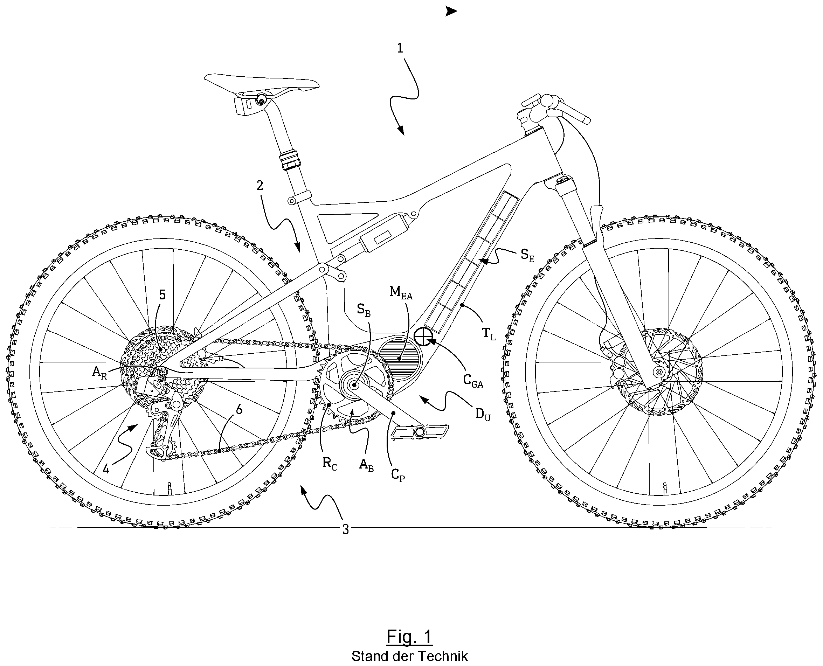

Fig. 1 zeigt ein Mountainbike mit elektrischem Zusatzantrieb gemäß dem Stand der Technik. Das Mountainbike besitzt einen Rahmen 1 mit einem gefederten Hinterbau 2. Der Antriebsstrang 3 des Mountainbikes umfasst eine Tretlagerbaugruppe A_{B} mit einer Tretlagerwelle S_{B}, ein Kettenrad Rc, ein hinteres Schaltwerk 4, eine auf der Hinterradachse A_{R} angeordnete Mehrfach-Ritzelkassette 5 sowie eine Antriebskette 6.

Weiterhin ist das Mountainbike mit einer den Fahrer unterstützenden elektrischen Antriebseinheit Du ausgestattet, die als sog. Mittelmotor ausgebildet ist, also im Bereich der Tretlagerbaugruppe A_{B} angeordnet ist, und die eine elektrische Motoreinrichtung M_{EA} gemäß dem Stand der Technik umfasst. Der Antriebseinheit Du ist eine Energiespeichereinrichtung S_{E} zugeordnet.

Die Energiespeichereinrichtung S_{E} zum Antrieb der Motoreinrichtung M_{EA} der Antriebseinheit Du ist im Unterrohr T_{L} des Fahrradrahmens 1 angeordnet. Aufgrund der Positionierung der Motoreinrichtung M_{EA} sowie der Energiespeichereinrichtung S_{E} vor sowie oberhalb der Tretlagerwelle S_{B}, welche eine in Fig. 1 eingezeichnete, gemeinsame Schwerpunktlage C_{G} von Antriebseinheit Du und Energiespeichereinrichtung S_{E} mit sich bringt, wird deutlich, dass sich der Schwerpunkt des Fahrrads durch diese Baugruppen, welche eine erhebliche Masse aufweisen, verhältnismäßig weit nach oben und nach vorne verlagert, mit den in der Beschreibungseinleitung ausgeführten Nachteilen bezüglich Handling und Fahrsicherheit.

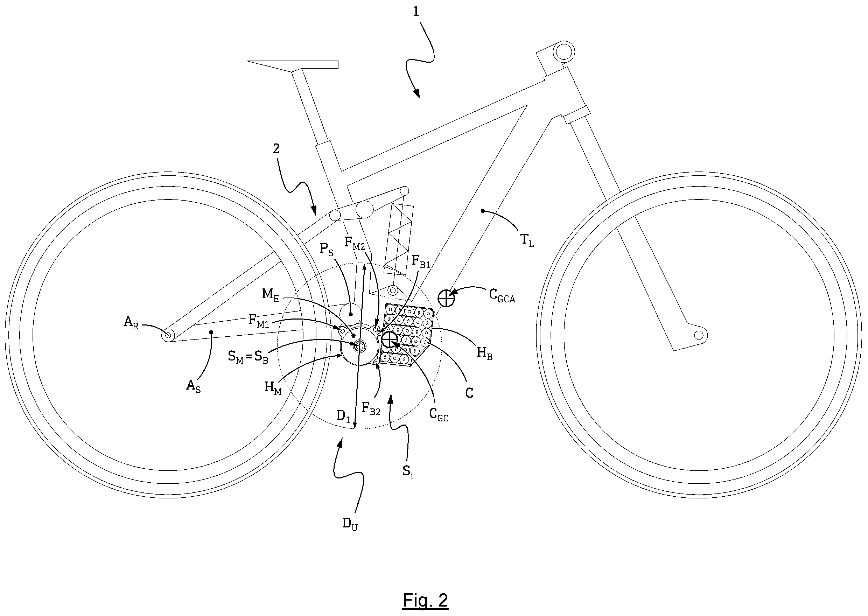

Fig. 2 zeigt in schematisierter Darstellung die wesentlichen Baugruppen und Komponenten eines E-Mountainbikes, welches mit einer Ausführungsform einer Antriebseinheit Du gemäß der vorliegenden Offenbarung ausgestattet ist.

Neben der schematisierten Darstellung der meisten Komponenten sind der Einfachheit und besseren Deutlichkeit halber in Fig. 2 auch der Antriebsstrang 3 gemäß Fig. 1 ebenso wie die vor einer Längsmittelebene des Fahrrads liegenden Teile der Radaufhängungen nicht dargestellt.

Das Motorgehäuse H_{M}, und damit auch das an dem Motorgehäuse H_{M} befestigte Akkugehäuse H_{B} der Energiespeichereinrichtung S_{E} ist vorliegend an zwei Rahmenschnittstellen bzw. Befestigungsachsen F_{M1} und F_{M2} mit dem Rahmen 1 verbindbar bzw. verbunden. Die Energiespeichereinrichtung S_{E} bzw. das Akkugehäuse H_{B} ist mittels zweier Befestigungspunkte bzw. Befestigungsachsen F_{B1} und F_{B2} mit dem Motorgehäuse H_{M} verbunden.

Hierdurch erübrigen sich die beim Stand der Technik gemäß Fig. 1 notwendigen zusätzlichen Befestigungsschnittstellen zwischen der Energiespeichereinrichtung S_{E} und dem Fahrradrahmen 1, was eine Reduktion von Komplexität, Gewicht und Kosten mit sich bringt. Alternativ zur Darstellung in Fig. 2 kann die Energiespeichereinrichtung S_{E} auch zusammen mit den sonstigen Baugruppen der Antriebseinheit Du in einem einzigen gemeinsamen Gehäuse angeordnet sein.

Im Vergleich zu Fig. 1 wird deutlich, dass der Masseschwerpunkt C_{G} der koaxialen Antriebseinheit D_{U} im Fahrrad erheblich tiefer und erheblich weiter hinten liegt als bei nicht koaxial ausgebildeten und angeordneten Antriebseinheiten, wodurch sich die in der Beschreibungseinleitung ausgeführten Nachteile insbesondere bezüglich Handling und Fahrsicherheit abmildern lassen.

Der Einsatz einer koaxial zur Tretlagerwelle S_{B} ausgebildeten Antriebseinheit Du, bei der somit die Längsachse der Motorwelle S_{M} mit der Längsachse der Tretlagerwelle S_{B} zusammenfällt, ermöglicht ferner eine besonders kompakte Gestaltung der Antriebseinheit Du, so dass gegenüber einer nicht koaxial ausgebildeten Antriebseinheit wie beispielsweise gemäß Fig. 1 freiwerdender Bauraum im Tretlagerbereich D₁ für andere Komponenten, vorliegend insbesondere für die Energiespeichereinrichtung S_{E} mit den darin enthaltenen Batteriezellen C, sowie weiterhin für die Schwenklagerung Ps bzw. Anbindung der Hinterbauschwinge As genutzt werden kann.

Auch kann die Kettenstrebenlänge bzw. der Abstand zwischen Hinterradachse A_{R} und Tretlagerwelle S_{B} aufgrund der insbesondere im Durchmesser sehr kompakten, koaxialen Antriebseinheit Du wünschenswert kurz gehalten werden, und es steht genügend radialer Freiraum im Tretlagerbereich D₁ für den Hinterreifen zur Verfügung.

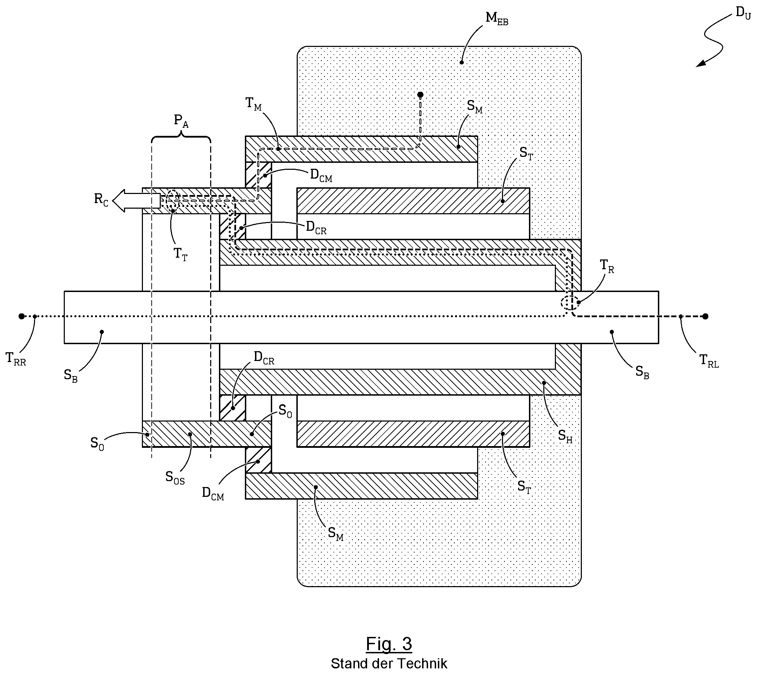

Fig. 3 zeigt in einer höchst schematisierten Darstellung ein Beispiel für eine aus dem Stand der Technik bekannte Tretlager-koaxiale Antriebseinheit Du mit einer üblicherweise ein Getriebe umfassenden Motoreinrichtung M_{EB} im Längsschnitt. Das in Fig. 3 dargestellte Funktionsprinzip insbesondere für die Messung des Fahrer-Drehmoments T_{R} stimmt beispielsweise mit der aus der DE'823 bekannten Antriebseinheit überein. Motor und Getriebe sind in Fig. 3 nicht näher dargestellt, sondern durch den punktierten Flächenbereich M_{EB} symbolisiert, vgl. diesbezüglich jedoch Fig. 15, 22, 26, 31 und 39 der DE'823.

Man erkennt, dass diese bekannte Antriebseinheit Du zur Messung des Fahrer-Summendrehmoments T_{R}, welches sich aus dem vom Fahrer auf die linksseitige Pedalkurbel aufgebrachten Drehmoment T_{RL} und dem vom Fahrer auf die rechtsseitige Pedalkurbel aufgebrachten Drehmoment T_{RR} zusammensetzt, eigens eine Torsions-Messhohlwelle S_{H} benötigt. Das Fahrer-Summendrehmoment T_{R} wird hierzu durch die zeichnungsbezogen rechtsseitig mit der Tretlagerwelle S_{B} fest verbundene Torsions-Messhohlwelle S_{H} durchgeleitet, wobei das Fahrer-Summendrehmoment T_{R} mittels des radial außerhalb der Torsions-Messhohlwelle S_{H} angeordneten Drehmomentsensor S_{T} beispielsweise berührungslos gemessen wird. Anschließend wird das Fahrer-Summendrehmoment T_{R} über eine als Freilauf D_{CR} ausgebildete Fahrermoment-Einkopplungseinrichtung auf die Ausgangshohlwelle So der Antriebseinheit Du geleitet.

Auf der Ausgangshohlwelle So vereinigt sich das Fahrer-Summendrehmoment T_{R} sodann mit dem über eine ebenfalls als Freilauf D_{CM} ausgebildete Motormoment-Einkopplungseinrichtung zu einem Gesamt-Antriebsmoment T_{T}. Das Gesamt-Antriebsmoment T_{T} wird durch einen - in einem axialen Bereich P_{A} der Ausgangshohlwelle So gelegenen - Ausgangshohlwellenabschnitt Sos auf das (nicht dargestellte) Kettenrad Rc und damit in den Antriebsstrang 3 des Fahrrads geleitet.

In Fig. 3 wird leicht erkennbar, dass diese bekannte Antriebseinheit Du, insbesondere aufgrund der spezifisch für die Drehmomentmessung erforderlichen Torsions-Messhohlwelle S_{H}, sowie aufgrund der koaxial um die Torsions-Messhohlwelle S_{H} anzuordnenden weiteren Baugruppen Sensoreinrichtung S_{T}, Freiläufe D_{CR} und D_{CM} sowie Motoreinrichtung M_{EB} mit Elektromotor und Untersetzungsgetriebe, einen großen radialen Durchmesser aufweist und insgesamt einen vergleichsweise sehr großen Bauraum beansprucht, wie auch in der Beschreibungseinleitung der vorliegenden Offenbarung ausgeführt.

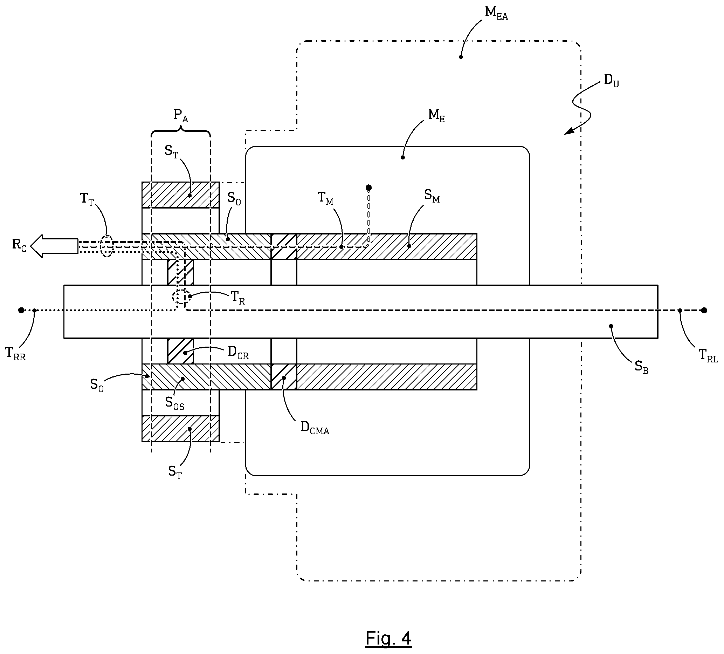

Im Unterschied dazu zeigt Fig. 4 in einer Fig. 3 entsprechenden, schematischen Darstellung ein Wirkprinzip einer Antriebseinheit nach der vorliegenden Offenbarung, welches ähnlich den nachfolgenden ersten und fünften Ausführungsformen ist.

Man erkennt zunächst den nochmals als strichlierte Linie eingezeichneten Umriss der Motoreinrichtung M_{EB} der Antriebseinheit Du nach dem Stand der Technik gemäß Fig. 3. Hierdurch wird bereits die sehr große Bauraumersparnis deutlich, die mit der Antriebseinheit Du gemäß der vorliegenden Offenbarung möglich wird.

Die Zusammenschau von Fig. 4 mit dem Stand der Technik gemäß Fig. 3 zeigt weiterhin insbesondere, dass es die Lösung gemäß der vorliegenden Offenbarung erlaubt, vollständig auf die Torsions-Messhohlwelle S_{H} gemäß Fig. 3 zu verzichten. Die (zudem meist relativ lange) Torsions-Messhohlwelle S_{H} ist beim Stand der Technik erforderlich, da das Drehmoment dort durch Messung der rotatorischen Torsionsverformung der Torsions-Messhohlwelle S_{H} erfolgt, indem entsprechende Torsionsspannungen, also in Umfangsrichtung der Torsions-Messhohlwelle S_{H} verlaufende Scherspannungen mittels der die Torsions-Messhohlwelle S_{H} koaxial Umgebenden Sensoreinrichtung S_{T} gemessen werden, woraus sodann das Fahrer-Summendrehmoment T_{S} ermittelt wird. Erst anschließend können Fahrer-Drehmoment T_{S} und Motordrehmoment T_{M} auf einer weiteren Welle, hier auf der Ausgangshohlwelle So der Antriebseinrichtung Du vereinigt werden.

Man erkennt, dass diese im Stand der Technik übliche Methode zur Messung des Fahrer-Drehmoments T_{R} dazu führt, dass in einem mittleren Bereich der Tretlagerwelle S_{B} drei koaxial ineinander verschachtelte Hohlwellen erforderlich sind, die Tretlagerwelle S_{B} nicht mitgezählt: Erstens die Torsions-Messhohlwelle S_{H}, zweitens eine koaxial zur Torsions-Messhohlwelle S_{H} angeordnete Welle zur Aufnahme der Sensoreinrichtung S_{T}, und als dritte in demselben axialen Bereich der Tretlagerachse S_{B} angeordnete Welle schließlich die Motorwelle S_{M}.

Wenn auch Fig. 3 lediglich schematisch und nicht maßstabsgetreu ist, so führt dies doch ersichtlich zu einem vergleichsweise großen Durchmesser der Antriebseinrichtung Du. Insbesondere steht der durch die drei koaxialen Hohlwellen S_{H}, S_{T} und S_{M} eingenommene, erhebliche Bauraum in radialer Richtung nicht mehr für Rotor/Stator und Getriebe der Motoreinrichtung M_{EB} zur Verfügung. Die Motoreinrichtung M_{E} muss daher radial nach außen und/oder axial ausweichen, was dementsprechend insgesamt zu einer deutlichen Vergrößerung der Länge und/oder des Außendurchmessers der Antriebseinheit Du führt.

Dies kann auch den Figuren 15, 22, 26, 31 und 39 der DE'823 entnommen werden. In Fig. 15 der DE'823 bezeichnet Bezugsziffer 140 die Torsionshohlwelle S_{H} (dort als Messwelle bezeichnet), Bezugsziffer 184 die Sensoreinrichtung S_{T} (dort als Spulenkörper bezeichnet) und Bezugsziffer 174 die Motorwelle S_{M} (dort als Stützwelle bzw. Rotorwelle bezeichnet). In den anderen Figuren der DE'823 sind diese Elemente teilweise nicht mit Bezugsziffern versehen, jedoch ebenfalls deutlich erkennbar.

Bei der Ausführungsform der Antriebseinheit Du gemäß Fig. 4 kann auf die ineinander verschachtelten beiden Wellen der Torsions-Messhohlwelle S_{H} und der Sensoreinrichtung S_{T} verzichtet werden, da das Fahrer-Drehmoment Tₛ gemäß der vorliegenden Offenbarung in dem axialen Bereich P_{A} desselben Abschnitt Sos der Ausgangshohlwelle So gemessen werden kann, durch welchen auch das Motor-Drehmoment hindurch geleitet wird.

Bei den Ausführungsformen gemäß Fig. 4 bis 6 und 9A bis 9C geschieht dies dadurch, dass das Fahrer-Drehmoment T_{R} durch einen in dem axialen Bereich P_{A}, welcher mit dem Abschnitt Sos der Ausgangshohlwelle So übereinstimmt, angeordneten Radialfreilauf D_{CR} hindurch geleitet wird, wobei der Radialfreilauf D_{CR} bei Beaufschlagung mit dem Fahrer-Drehmoment T_{R} radiale Kräfte nach außen auf die Ausgangshohlwelle So erzeugt, welche die Ausgangshohlwelle So nach radial außen aufweiten.

Durch diese radiale Aufweitung der Ausgangshohlwelle So in deren Abschnitt Sos werden in der Ausgangshohlwelle So in Umlaufrichtung verlaufende Materialspannungen erzeugt, welche mit der den Abschnitt Sos der Ausgangshohlwelle So umgreifenden Sensoreinrichtung S_{T} vorzugsweise berührungslos gemessen werden. Diese Messung des Fahrer-Drehmoments T_{R} durch Erfassung der von einem Radialfreilauf D_{CR} induzierten Umfangsspannungen der Ausgangshohlwelle So wird faktisch auch nicht beeinträchtigt oder nennenswert verfälscht durch das Motordrehmoment T_{M}, welches denselben Abschnitt Sos der Ausgangshohlwelle So ebenfalls durchfließt, da das Motordrehmoment T_{M} lediglich Scherspannungen in Umlaufrichtung in dem Abschnitt Sos der Ausgangshohlwelle So erzeugt.

Die vom Motordrehmoment T_{M} in dem Abschnitt Sos der Ausgangshohlwelle So hervorgerufenen Scherspannungen und die vom Fahrer-Drehmoment T_{R} ebenfalls in dem Abschnitt Sos hervorgerufenen Umfangsspannungen verlaufen in aufeinander senkrecht stehenden Raumrichtungen, und sind daher aufgrund des physikalischen Superpositionsprinzips voneinander unabhängig zumindest in erster Ordnung bzw. Näherung, welche für die üblicherweise erforderliche Genauigkeit der Messung des Fahrer-Drehmoments T_{R} vollkommen ausreicht. Eine höhere Genauigkeit ist dennoch möglich, indem das Motordrehmoment T_{M} entweder im Motor gemessen oder aus dem Motorstrom berechnet wird, und sodann ein entsprechender Korrekturfaktor auf den Messwert des Fahrer-Drehmoments T_{R} angewandt wird.

Es wird bei den Ausführungsformen gemäß Fig. 4 bis 6 und 9A bis 9C mit anderen Worten die Ausgangshohlwelle So gleichzeitig als Messhohlwelle verwendet, wodurch die beim Stand der Technik erforderliche Torsions-Messhohlwelle S_{H} vollständig entfällt. Durch den Entfall der üblicherweise in einem axial mittleren Bereich der Antriebseinheit Du angeordneten Messhohlwelle S_{H} entfällt auch die Notwendigkeit, die Sensoreinrichtung S_{T}, die üblicherweise auch in Form einer Hohlwelle vorliegt, in diesem axial mittleren Bereich der Antriebseinheit Du anzuordnen. Stattdessen kann die Sensoreinrichtung S_{T} axial entfernt von der Motoreinrichtung M_{E} im Abschnitt Sos der Ausgangshohlwelle So angeordnet werden, was sehr deutlich aus Fig. 4 hervorgeht.

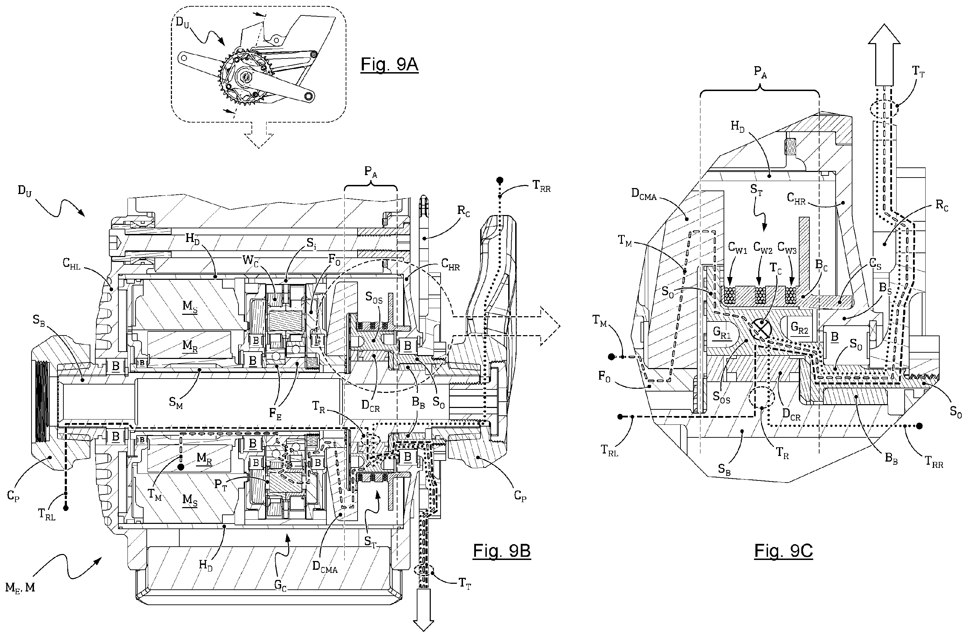

Mit dem Entfall der Torsionshohlwelle S_{H} gemäß Fig. 3, mit der Verlagerung der Sensoreinrichtung S_{T} heraus aus dem axial mittleren Bereich der Antriebseinheit Du und mit der Messung des Fahrer-Drehmoments T_{R} direkt in der Ausgangshohlwelle So wird es zudem möglich, das Motordrehmoment T_{M} mittels eines Axialfreilauf D_{CMA} in die Ausgangshohlwelle So einzuleiten, wie dies in den Ausführungsformen gemäß Fig. 4 und Fig. 9A bis 9C verwirklicht ist.

Wie insbesondere in Fig. 4 deutlich erkennbar, führt der mit der vorliegenden Offenbarung ermöglichte Entfall der Torsions-Messhohlwelle S_{H} und die ebenfalls ermöglichte maßgeblich geänderte Positionierung der Sensoreinrichtung S_{T} zu einer außerordentlichen Verkleinerung des von der Sensoreinrichtung benötigten Bauraums. Die Motoreinrichtung M_{E} gemäß Fig. 4 kann somit ganz bedeutend kompakter ausgebildet werden als die Motoreinrichtung M_{EA} bei einer aus dem Stand der Technik bekannten Antriebseinheit Du (vgl. den strichliert in Fig. 4 eingezeichneten Umriss der Motoreinrichtung M_{EA} gemäß Fig. 3).

Auf Basis der vorliegenden Offenbarung lassen sich somit elektrische Fahrrad-Antriebseinheiten Du insbesondere der koaxialen Bauform darstellen, die bedeutend kompakter und leichter ausgebildet werden können als die aus dem Stand der Technik bekannten Antriebseinheiten.

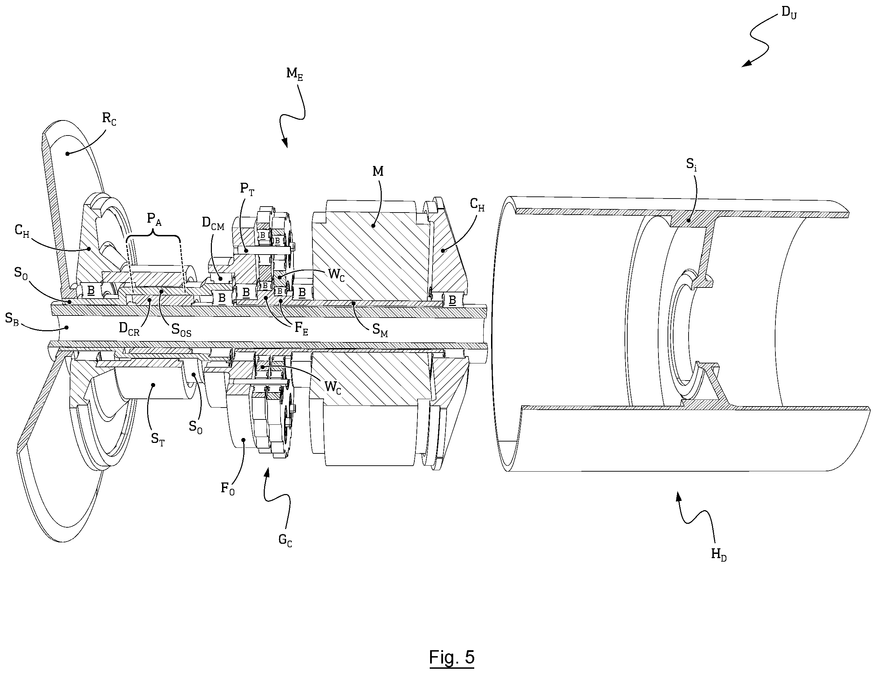

Fig. 5 zeigt eine erste Ausführungsform einer Antriebseinheit Du nach der vorliegenden Offenbarung in geschnittener perspektivischer Explosionsdarstellung. Dabei ist lediglich das Antriebsgehäuse H_{D} von den restlichen Komponenten explodiert bzw. entfernt dargestellt, somit befinden sich alle anderen Komponenten an ihren vorgesehenen Positionen. Sämtliche Lagereinrichtungen bzw. Lagerstellen sind mit dem Bezugszeichen B gekennzeichnet.

Man erkennt eine Motoreinrichtung M_{E}, welche einen nur schematisch angedeuteten Elektromotor M sowie ein hier als Zykloidgetriebe Gc ausgebildetes Untersetzungsgetriebe umfasst. Das Zykloidgetriebe Gc umfasst zwei Zykloidenräder Wc, welche über Lagereinrichtungen B, beispielsweise Kugellager, auf zwei exzentrisch sowie rotatorisch phasenverschoben auf der Motorwelle S_{M} angeordneten Lagersitzen F_{E} gelagert sind. Die Zykloidenräder Wc besitzen entlang ihres Außenumfangs zykloidenförmige Zähne bzw. Nocken, welche in entsprechend formkorrespondierend ausgebildete, in Fig. 5 nicht dargestellte wellenförmige Zähne in einem Innenverzahnungsbereich Sᵢ des Antriebsgehäuses H_{D} eingreifen, wobei die Zähnezahl des Innenverzahnungsbereich Sᵢ typischerweise um 1 größer ist als die Zähnezahl der Zykloidenräder Wc. Hierdurch ergibt sich das für ein derartiges Zykloidgetriebe Gc typische sehr hohe Übersetzungsverhältnis.

Die aufgrund der vorgenannten Zähnezahlverhältnisse relativ zur Motordrehzahl sehr langsam um die eigene Achse rotierenden Zykloidenräder Wc teilen diese Rotationsbewegung über die Übertragungsstifte P_{T} einem Abtriebsflansch Fo mit. Die Rotation des Abtriebsflanschs Fo wird sodann über den Motorfreilauf D_{CM} auf die Ausgangshohlwelle So der Antriebseinheit Du geleitet.

Das über die Tretlagerwelle S_{B} eingeleitete Fahrer-Drehmoment wird, über den Fahrerfreilauf D_{CR}, ebenfalls auf die Ausgangshohlwelle So geleitet. Die dergestalt vereinigten Drehmomente von Fahrer und Motor werden sodann als Gesamtdrehmoment T_{T} auf das Kettenrad Rc und von dort in den Antriebsstrang 3 des Fahrrads geleitet.

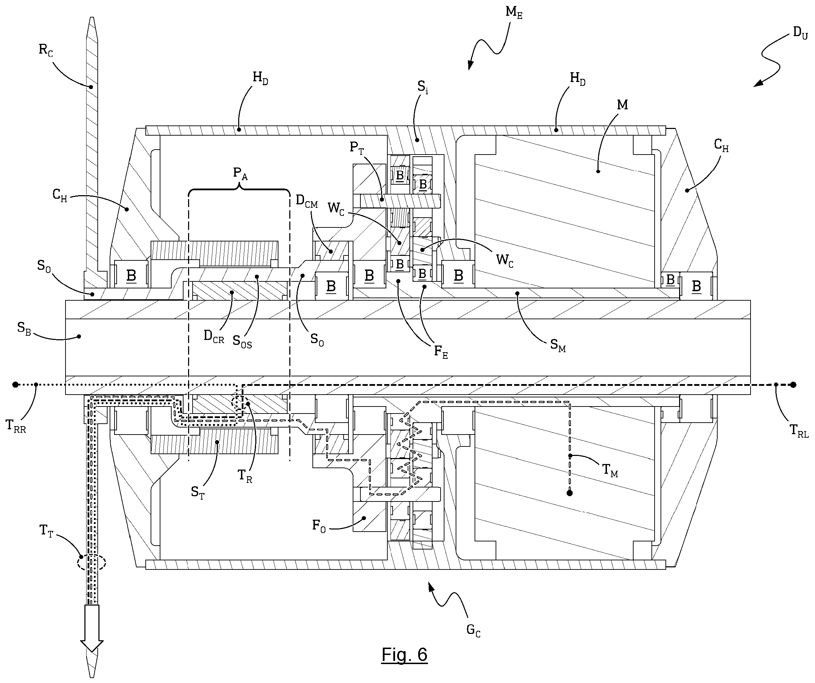

Fig. 6 zeigt die Antriebseinheit gemäß Fig. 5 im Längsschnitt. Außer den schon in Fig. 5 gezeigten Baugruppen bzw. Bauelementen sind in Fig. 6 auch die Verläufe des linksseitigen Fahrer-Drehmoments T_{RL}, des rechtsseitigen Fahrer-Drehmoments T_{RR} sowie des Motordrehmoments T_{M} dargestellt. Ferner ist der axiale Bereich P_{A} verzeichnet, welcher im Betrieb der Antriebseinheit Du sowohl von dem gesamten Fahrer-Summendrehmoment T_{R} als auch von dem gesamten Motordrehmoment T_{M} durchflossen wird.

Dennoch kann das Fahrer-Summendrehmoment T_{R} unabhängig und zumindest in erster Näherung unbeeinflusst von dem Motordrehmoment T_{M} gemessen werden aufgrund der Anordnung der Drehmoment-Sensoreinrichtung S_{T} in dem axialen Bereich P_{A}, in dem sich bei dieser Ausführungsform auch die Fahrermoment-Einkopplungseinrichtung, vorliegend also der Freilauf D_{CR} für das Fahrer-Drehmoment T_{R} befindet.

Für diese Messung wird die radiale Verformung der Ausgangshohlwelle So im Bereich des Ausgangshohlwellenabschnitts Sos, bzw. die sich dadurch ergebenden, in Umfangsrichtung des Ausgangshohlwellenabschnitts Sos verlaufenden Materialspannungen durch die Sensoreinrichtung S_{T} gemessen, die bei der Durchleitung der Fahrer-Drehmomente T_{RL} bzw. T_{RR} durch die beispielsweise als Klemmrollen- oder allgemeiner Klemmkörperfreilauf D_{CR} ausgebildete Fahrermoment-Einkopplungseinrichtung auftretende Durchmesseraufweitung des Klemmrollenfreilaufs D_{CR} entsteht.

Mit anderen Worten wird bei dieser Ausführungsform also die Umfangsspannung am Außendurchmesser des Ausgangshohlwellenabschnitts Sos im Bereich des Klemmkörperfreilaufs D_{CR} gemessen. Diese in Umfangsrichtung verlaufenden Materialspannungen sind proportional zum Fahrer-Drehmoment T_{R}, so dass die Sensoreinrichtung S_{T} entsprechend dem tatsächlichen Fahrer-Drehmoment T_{R} herstellerseitig kalibriert werden kann.

Die in dem Ausgangshohlwellenabschnitt Sos ebenfalls auftretenden Torsions- bzw. Scherspannungen, die sich durch das über den Motorfreilauf D_{CM} in die Ausgangshohlwelle So eingeleitete und durch die Ausgangshohlwelle So durchgeleitete Motordrehmoment T_{M} ergeben, verfälschen dabei aufgrund des physikalischen Superpositionsprinzips nicht die Messwerte für das Fahrer-Drehmoment T_{R}, zumindest nicht in erster Ordnung bzw. Näherung. Zudem kann die elastische Verformung aufgrund der motormomentbedingten Torsions- bzw. Scherspannungen mittels entsprechender Dimensionierung der Ausgangshohlwelle So, im Vergleich zu der erheblichen radialen Aufspreizung des Ausgangshohlwellenabschnitts Sos durch den Klemmkörperfreilauf D_{CR}, vernachlässigbar gering gehalten werden.

Durch gezielte Messung ausdrücklich nur der Umfangsspannung durch die Sensoreinrichtung S_{T} kann die Messgenauigkeit bzw. die Isolation des Fahrer-Drehmoments T_{R} vom Motordrehmoment T_{M} noch weiter verbessert werden. Für eine Messung mit Dehnmessstreifen werden diese hierzu in Umfangsrichtung auf dem Ausgangshohlwellenabschnitt Sos angeordnet und ausgerichtet, so dass die Scherspannung durch Torsion kaum mehr in die Messung eingeht. Äquivalent kann eine entsprechende magnetische Feldeinbringung durch die Sensoreinrichtung S_{T} die Messgenauigkeit bei der Variante mit magnetostriktiver Messung optimieren.

Zusammenfassend wird bei dieser Ausführungsform somit die Material-Verformungsrichtung des Ausgangshohlwellenabschnitts Sos in dem axialen Bereich P_{A} genutzt und von der Sensoreinrichtung unterschieden, um das Fahrer-Drehmoment T_{R} von dem Motordrehmoment T_{M} bei der Messung zu isolieren.

Um die Genauigkeit des dergestalt gemessenen Fahrer-Drehmoments T_{R} noch weiter verbessern zu können, kann aus der vom Motor M aufgenommenen elektrischen Leistung bzw. aus dem Arbeitspunkt des Motors M (Motordrehmoment in Abhängigkeit z.B. von Strom, Spannung, Drehzahl, Temperatur) näherungsweise das Motordrehmoment bestimmt werden, um eine etwaige, jedoch erst in höherer Ordnung mögliche Verfälschung des Messwertes für das Fahrer-Drehmoment T_{R} durch die Scherspannungen des Motordrehmoments T_{M} zu korrigieren.

Der radial zwischen der Sensoreinrichtung S_{T} und dem Antriebsgehäuse H_{D} erkennbare Freiraum kann für andere Baugruppen genutzt werden, beispielsweise für Teile des Untersetzungsgetriebes Gc, für elektronische Komponenten wie Motor- und Batteriecontroller oder für Energiespeicher.

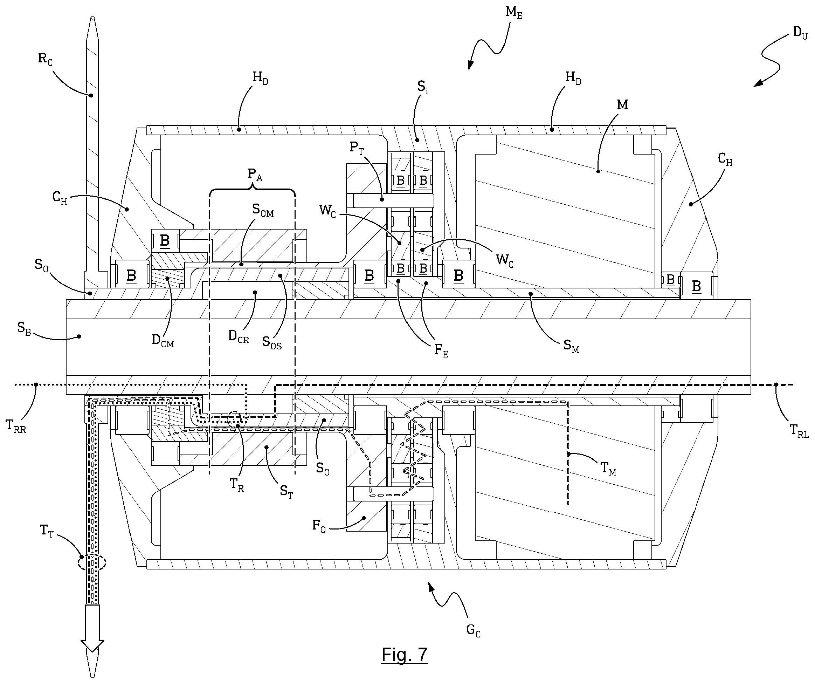

Fig. 7 zeigt eine zweite Ausführungsform einer Antriebseinheit Du im Längsschnitt. Auch bei dieser Ausführungsform erfolgt die Messung des Fahrer-Drehmoments T_{R} in dem axialen Bereich P_{A} der Ausgangshohlwelle So, also in dem Ausgangshohlwellenabschnitt Sos. Im Unterschied zu der Ausführungsform gemäß Fig. 5 und 6 wird bei der Ausführungsform gemäß Fig. 7 das Motordrehmoment T_{M} physisch getrennt von dem Fahrer-Drehmoment T_{R} durch den axialen Bereich P_{A} geleitet.

Hierzu umfasst die Antriebseinheit Du gemäß Fig. 7 eine zwischen der Motoreinrichtung M_{E} und der Motormoment-Einkopplungseinrichtung D_{CM} angeordnete Motor-Abtriebshohlwelle S_{OM}. Die Motor-Abtriebshohlwelle S_{OM} ist in dem axialen Bereich P_{A} koaxial zu dem Ausgangshohlwellenabschnitt Sos sowie radial außerhalb des Ausgangshohlwellenabschnitts Sos angeordnet und für Magnetfelder durchlässig ausgebildet. Die Durchlässigkeit der Motor-Abtriebshohlwelle S_{OM} für Magnetfelder in dem axialen Bereich P_{A} lässt sich beispielsweise dadurch erzielen, dass die Motor-Abtriebshohlwelle S_{OM} zumindest in dem axialen Bereich P_{A} aus einem paramagnetischen Material wie beispielsweise Aluminium ausgebildet wird, und zudem vorzugsweise eine vergleichsweise geringe Wandstärke erhält.

Dieser paramagnetische und vorzugsweise dünnwandige Abschnitt S_{OM} der Motor-Abtriebshohlwelle ist derart dimensioniert, dass in dem axialen Bereich P_{A} ausreichend axialer Bauraum für einen magnetostriktiven Sensor S_{T} vorhanden ist. Auf diese Weise kann mittels der Sensoreinrichtung S_{T} durch die Motor-Abtriebshohlwelle S_{OM} hindurch berührungslos das dort lediglich aus dem Fahrer-Drehmoment T_{R} bestehende Drehmoment in dem Ausgangshohlwellenabschnitt Sos gemessen werden.

Die Einleitung des Motordrehmoments T_{M} auf die Ausgangshohlwelle So über den Motorfreilauf D_{CM} erfolgt bezüglich des Momentflusses hier somit erst stromabwärts von der Drehmomentmessung (in Richtung zum Kettenrad Rc). Auf diese Weise kann also das Fahrer-Drehmoment T_{R} vollständig isoliert vom Motordrehmoment T_{M} gemessen werden. Die Drehmomentmessung an der Ausgangshohlwelle So kann bei dieser Anordnung in einem axialen Bereich des Fahrerfreilaufs D_{CR}, oder auch in einem ganz oder vorwiegend nur durch Torsion belasteten axialen Abschnitt Sos der Ausgangshohlwelle So gemessen werden.

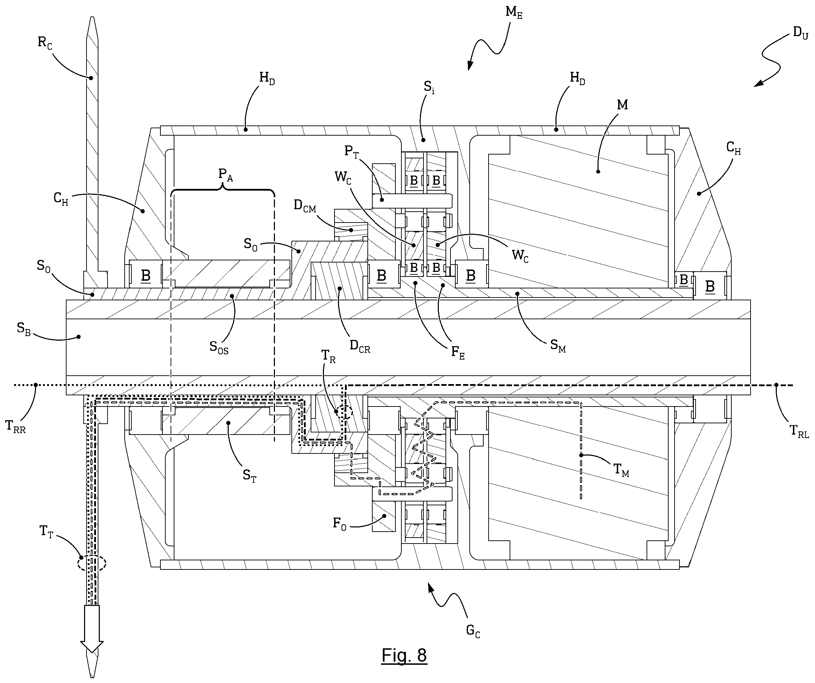

Fig. 8 zeigt eine dritte Ausführungsform einer Antriebseinheit Du im Längsschnitt. Bei dieser Ausführungsform werden Fahrer-Drehmoment T_{R} und Motordrehmoment T_{M} wiederum über Freiläufe D_{CR} bzw. D_{CM} in die Ausgangshohlwelle So eingeleitet. Die Drehmomentmessung erfolgt bei dieser Ausführungsform mittels einer Sensoreinrichtung S_{T} im Bereich eines Ausgangshohlwellenabschnitts Sos, welcher bei dieser Ausführungsform vom Gesamtdrehmoment T_{T}, also von der Summe aus Fahrer-Drehmoment T_{R} und Motordrehmoment T_{M} durchflossen wird.

Um aus dieser Messung ein geeignetes Signal hinsichtlich des Fahrer-Drehmoments T_{R} für die Motorsteuerung ableiten zu können, wird das Motordrehmoment T_{M} vorzugsweise in Echtzeit bzw. in sehr kurzen Zeitabständen ermittelt und von dem jeweils gemessenen Gesamtdrehmoment T_{T} subtrahiert.

Um Bauraum und Kosten zu sparen, wird das Motordrehmoment T_{M} dabei bevorzugt nicht direkt gemessen, sondern aus der vom Motor aufgenommenen elektrischen Leistung errechnet. Die Genauigkeit der Ermittlung des Fahrer-Drehmoments T_{R} wird durch die Berechnung und Subtraktion des Motordrehmoments T_{M} etwas verringert, kann jedoch durch die hier gut zugängliche Drehmomentmessung in Bereich des Ausgangshohlwellenabschnitts Sos zumindest teilweise wieder kompensiert werden.

Auch erlaubt diese Anordnung eine besonders kostengünstige Fertigung, so dass geringe Kompromisse bei der Messgenauigkeit des Fahrer-Drehmoments T_{R} gerechtfertigt werden können.

Fig. 9A bis 9C zeigen eine vierte Ausführungsform einer Antriebseinheit DU gemäß der vorliegenden Offenbarung in einer Schnittdarstellung gemäß Fig. 9B und einem vergrößerten Ausschnitt daraus gemäß Fig. 9C, wobei Schnittverlauf und Blickrichtung auf den Schnitt in Fig. 9A angegeben sind.

Im Unterschied zu den Ausführungsformen gemäß Fig. 5 bis 7 ist die Antriebseinheit DU in den Darstellungen von Fig. 9A bis 9C in einen Fahrradrahmen 1 eingebaut, ähnlich wie in Fig. 2 schematisch dargestellt. Weiterhin verläuft die Blickrichtung auf die Schnittebene in Fig. 9A bis 9C, auf ein Fahrrad gemäß Fig. 1 oder 2 bezogen, von hinten nach vorne, weshalb sich das Kettenrad Rc in den Darstellungen von Fig. 9B und 9C zeichnungsbezogen auf der rechten Seite befindet.

Hingegen befindet sich das Kettenrad Rc in den Darstellungen von Fig. 3 bis 7 auf der linken Seite, dementsprechend verläuft die Blickrichtung auf die jeweilige Schnittebene gemäß Fig. 3 bis 7, auf ein Fahrrad gemäß Fig. 1 oder 2 bezogen, von vorne nach hinten. Dies bedeutet mit anderen Worten, dass die Darstellungen gemäß Fig. 9B und 9C spiegelbildlich gegenüber den Darstellungen von Fig. 3 bis 7 zu lesen sind.

Die vierte Ausführungsform gemäß Fig. 9A bis 9C ist hinsichtlich des Wirkungsprinzips der Drehmomentmessung und damit hinsichtlich der Kraftflüsse eng an die erste Ausführungsform gemäß Fig. 4 bis 6 angelehnt.

Fig. 9B und 9C zeigen die Antriebseinheit Du im Längsschnitt. Die Verläufe des linksseitigen Fahrer-Drehmoments T_{RL}, des rechtsseitigen Fahrer-Drehmoments T_{RR} sowie des Motordrehmoments T_{M} sind wieder durch entsprechend unterschiedlich strichlierte Linien dargestellt. Ferner ist wieder der axiale Bereich P_{A} verzeichnet, welcher im Betrieb der Antriebseinheit Du sowohl von dem gesamten Fahrer-Summendrehmoment T_{R} als auch von dem gesamten Motordrehmoment T_{M} durchflossen wird.

Ebenso wie in Fig. 5 bzw. 5 erkennt man in Fig. 9B bzw. 9C eine Motoreinrichtung M_{E}, hier mit einem Motor-Stator Ms, einem Motor-Rotor M_{R} und einer Motorwelle S_{M}.

Die Motorwelle S_{M} wirkt auf ein Zykloidgetriebe Gc, welches zusammen mit der Motorwelle S_{M} rotierende exzentrische Lagersitze F_{E}, mit einem Innenverzahnungsbereich Sᵢ kämmende, außenverzahnte Zykloidenräder Wc, ferner Übertragungsstifte P_{T}, sowie einen Abtriebsflansch Fo umfasst.

Aufgrund des systembedingt hohen Übersetzungsbereichs von Zykloidgetrieben genügt das einstufige Zykloidgetriebe Gc für die erforderliche Reduktion der vergleichsweise hohen Drehzahl eines Motor-Rotors M_{R} auf die vergleichsweise niedrige Drehzahl eines Kettenrads Rc an einem Fahrrad-Antriebsstrang 3.

Fig. 9C zeigt in einer vergrößerten Ausschnittsdarstellung aus Fig. 9B insbesondere den axialen Bereich P_{A}, welcher auch bei dieser Ausführungsform im Betrieb der Antriebseinheit Du sowohl von dem gesamten Fahrer-Summendrehmoment T_{R} als auch von dem gesamten Motordrehmoment T_{M} durchflossen wird.

Dem Kraftfluss von Motordrehmoment T_{M} und Fahrer-Summendrehmoment T_{R} in Fig. 9C von links nach rechts folgend, erkennt man zunächst den Motor-Freilauf D_{CMA}, welcher hier nur in schematische Blockdarstellung visualisiert ist, insbesondere ohne die Wiedergabe von Freilaufkörpern o.dgl., deren konkrete Ausführung für den Gegenstand dieser Offenbarung auch ohne Bedeutung ist. Vorzugsweise handelt es sich bei dem Motor-Freilauf D_{CMA} jedoch um einen Axialfreilauf, was dazu beiträgt, die Antriebseinheit Du besonders raumsparend gestalten zu können, vgl. die oben beschriebene Zusammenschau der Ausführungsform gemäß Fig. 4, welche ebenfalls einen Axialfreilauf D_{CMA} aufweist, mit dem Stand der Technik gemäß Fig. 3.

Bei der Ausführungsform gemäß Fig. 9A bis 9C leitet der Motor-Freilauf D_{CM}, wie bei der Ausführungsform gemäß Fig. 4 bis 6, das Ausgangsdrehmoment des Zykloidgetriebes Gc von dem Zykloidgetriebe-Abtriebsflansch Fo auf einen Ausgangshohlwellenabschnitt Sos, welcher den axialen Bereich P_{A} definiert, in dem die Drehmoment-Sensoreinrichtung S_{T} angeordnet ist.

Dabei wird durch den axialen Bereich P_{A} und den dort angeordneten Ausgangshohlwellenabschnitt Sos, soweit zunächst wie beim Stand der Technik gemäß Fig. 3, gemeinsam sowohl das Fahrer-Summendrehmoment T_{R} als auch das Motordrehmoment T_{M} hindurchgeleitet.

Gemäß der vorliegenden Offenbarung wird jedoch die Größe des Fahrer-Summendrehmoments T_{R}, anders als beim Stand der Technik gemäß Fig. 3, direkt in dem axialen Bereich P_{A} und in dem dort angeordneten Ausgangshohlwellenabschnitt Sos gemessen, welcher sowohl von dem Fahrer-Summendrehmoment T_{R} als auch von dem Motordrehmoment T_{M} durchflossen wird.

Dies ist insbesondere in Fig. 9C deutlich erkennbar. Dort werden Fahrer-Summendrehmoment T_{R} und Motordrehmoment T_{M} in dem Ausgangshohlwellenabschnitt Sos der Ausgangshohlwelle So gebündelt und fließen gemeinsam durch diesen Ausgangshohlwellenabschnitt Sos der Ausgangshohlwelle So, welche bei dieser Ausführungsform rechtsseitig im Bereich des Kettenrads Rc mittels einer Lagerbuchse B_{B}, beispielsweise mittels einer Gleitlagerbuchse, auf der Tretlagerwelle S_{B} gelagert ist.

Auch bei der vorliegend betrachteten Ausführungsform gemäß Fig. 9A bis 9C wird das Fahrer-Summendrehmoment T_{R} unabhängig von dem Motordrehmoment T_{M} gemessen, welches in dem Ausgangshohlwellenabschnitt Sos denselben Materialquerschnitt der Ausgangshohlwelle So durchfließt wie das Fahrer-Summendrehmoment T_{R}.

Dies erfolgt ähnlich wie bei der Ausführungsform gemäß Fig. 4 bis 6 dadurch, dass die Fahrermoment-Einkopplungseinrichtung D_{CR} (also der Fahrermoment-Freilauf, welcher einen motorischen Antrieb der Ausgangshohlwelle und damit des Fahrrad-Antriebsstrangs 3 auch dann erlaubt, wenn der Fahrer die Pedale nicht betätigt, und die Tretlagerwelle S_{B} somit stillsteht) in dem axialen Bereich P_{A} sowie radial innerhalb der Ausgangshohlwelle So angeordnet und beispielsweise als Klemmkörperfreilauf D_{CR} ausgebildet ist.

Sobald der Fahrer über die Pedalkurbeln C_{P} ein Fahrer-Drehmoment T_{RR} oder T_{RL} auf die Tretlagerwelle S_{B} aufbringt, beginnen die Pedalkurbeln C_{P} und die Tretlagerwelle S_{B} zu rotieren, wodurch der Klemmkörperfreilauf D_{CR} aktiviert wird und sich zu schließen beginnt.

Dieses Schließen des Klemmkörperfreilaufs D_{CR} erfolgt immer dann, wenn die Tretlagerwelle S_{B} schneller rotiert als der Motor- bzw. Getriebe-Abtriebsflansch Fo und damit schneller als die die Ausgangshohlwelle So. Diese Differenz in der Rotationsgeschwindigkeit von Tretlagerwelle S_{B} und Ausgangshohlwelle So ist jedoch stets Voraussetzung dafür, dass ein Fahrer-Drehmoment überhaupt in den Antriebsstrang 3 eingeleitet werden kann, und liegt immer dann vor, wenn der Fahrer aktiv bzw. mit einer gewissen Kraft in die Pedale tritt.

Aufgrund des geschlossenen Klemmkörperfreilaufs D_{CR} wird sodann das Fahrer-Summendrehmoment T_{R} durch den Klemmkörperfreilauf D_{CR} hindurchgeleitet. Durch die Klemmung der Freilaufkörper zwischen dem Freilauf-Innenring und dem Freilauf-Außenring entstehen in dem Klemmkörperfreilauf erhebliche Kräfte in radialer Richtung. Diese Kräfte teilen sich dem Ausgangshohlwellenabschnitt Sos mit, wodurch dieser in Radialrichtung elastisch aufgeweitet wird. Hierdurch werden wiederum Materialspannungen induziert, welche in Umfangsrichtung des Ausgangshohlwellenabschnitts Sos verlaufen.

Diese in Umfangsrichtung des Ausgangshohlwellenabschnitts Sos verlaufenden Materialspannungen sind in Fig. 9C durch das Symbol Tc eines in die Zeichenebene hineinzeigenden Pfeils symbolisiert. Die Messung dieser Materialspannungen Tc erfolgt durch die Sensoreinrichtung S_{T} vorzugsweise berührungslos. Auf diese Weise, sowie aufgrund des weiter oben erläuterten physikalischen Superpositionsprinzips zwischen den in Umfangsrichtung verlaufenen Materialspannungen Tc und den durch das Motordrehmoment T_{M} in dem Ausgangshohlwellenabschnitt Sos erzeugten Scherspannungen, kann das Fahrer-Drehmoment T_{R} durch die Sensoreinrichtung S_{T} mit hoher Genauigkeit ermittelt werden.

Wie in Fig. 9B und in der vergrößerten Ausschnittsdarstellung von Fig. 9C erkennbar, umfasst die Sensoreinrichtung S_{T} einen Spulenkörper Bc, welcher bei der dargestellten Ausführungsform drei Messspulen C_{W1}, C_{W2} und Cws trägt.

Aufbau, Funktionsprinzip und Auswertungselektronik der in Fig. 9B und 9C gezeigten Sensoreinrichtung S_{T} sind nicht Gegenstand der vorliegenden Offenbarung, sondern Gegenstand der unveröffentlichten Patentanmeldung US 63/286,370 (US'370). Die Offenbarung der US-Patentanmeldung US'370 wird hiermit durch Bezugnahme in die Offenbarung der vorliegenden Patentanmeldung eingeschlossen, wodurch Kombinationen der Sensoreinrichtung S_{T} gemäß der Offenbarung der US'370 mit den in der vorliegenden Offenbarung dargelegten Merkmalen, Ausführungsformen und Vorteilen der Anordnung einer derartigen Sensoreinrichtung S_{T} in einer elektrischen Fahrrad-Antriebseinheit Du offenbart sind.

Von den drei Messspulen C_{W1}, C_{W2} und C_{W3} dient die zeichnungsbezogen linksseitige Messspule Cwi der Erfassung der Änderung von Magnetfeldern in dem Ausgangshohlwellenabschnitt Sos, um daraus auf die Materialspannungen in dem Ausgangshohlwellenabschnitt Sos zu schließen. Die zeichnungsbezogen mittlere Messspule C_{W2} dient der Anregung von Wirbelströmen und/oder von Magnetfeldern in dem Ausgangshohlwellenabschnitt Sos. Gemäß der Lehre der Magnetoelastizität bestehen bei ferromagnetischen Materialien, wie vorliegend bei der vorzugsweise aus Stahl gefertigten Ausgangshohlwelle So, Abhängigkeiten zwischen mechanischen und magnetischen Eigenschaften. Bei Materialbelastungen und damit verbundenen geometrischen Verformungen (hier die radiale Aufweitung des Ausgangshohlwellenabschnitts Sos, ändern sich die magnetischen Eigenschaften des Ausgangshohlwellenabschnitts Sos.

Die zeichnungsbezogen linksseitige Messspule Cwi erfasst die durch die Spannungen bzw. Verformungen des Ausgangshohlwellenabschnitts bewirkten Änderungen der durch die zeichnungsbezogen mittlere Messspule C_{W2} induzierten Ströme bzw. Magnetfelder in dem Ausgangshohlwellenabschnitt Sos. Die zeichnungsbezogen rechtsseitige Messspule C_{W3} dient der Temperaturkompensation der Messung. Dies ist erforderlich, da im Bereich der Sensoreinrichtung S_{T} Temperaturschwankungen in der Größenordnung von 100 K auftreten können, insbesondere aufgrund der Wärmeentwicklung des Elektromotors M, Ms, M_{R}.

Besonders vorteilhaft ist es, wenn die Messspulen C_{W1}, C_{W2}, C_{W3}, wie in Fig. 9B und 9C sichtbar, in Form von Wicklungen ausgebildet sind, die in einer Umfangsrichtung verlaufen. Auf diese Weise lässt sich der Spulenkörper Bc sehr einfach und kostengünstig fertigen, und die Sensoreinrichtung S_{T} ist auch anspruchsvollen Belastungen und damit verbundenen Erschütterungen bzw. Temperaturbelastungen gewachsen. Die Einzelheiten zu Herstellung und Gestaltung der Messspulen C_{W1}, C_{W2}, Cws sowie deren Beschaltung und Auswertungselektronik sind Gegenstand der vorgenannten US-Anmeldung US'370, deren Offenbarung durch Bezugnahme in die Offenbarung der vorliegenden Patentanmeldung eingeschlossen ist.

Der Ausgangshohlwellenabschnitt Sos weist bei der dargestellten Ausführungsform zwei umlaufende Ausnehmungsnuten G_{R1} und G_{R2} auf. Das Vorhandensein und/oder die Wahl der Größe und der geometrischen Ausformung einer oder beider Ausnehmungsnuten G_{R1} und G_{R2} beeinflusst die Kennlinie der Messung durch die Sensoreinrichtung S_{T}. Insbesondere lässt sich durch geeignete Wahl und Ausbildung einer oder beider Ausnehmungsnuten G_{R1} und G_{R2} die Empfindlichkeit und Genauigkeit der Messung des Fahrer-Drehmoments T_{R} durch die Sensoreinrichtung S_{T} optimieren.

Bei der in Fig. 9B und 9C dargestellten Ausführungsform ist der Spulenkörper Bc auf einem durch den Lagersitz des Lagers B_{R} der Ausgangshohlwelle So gebildeten links innenseitigen Vorsprung Bs des rechtsseitigen Gehäusedeckels C_{HR} angeordnet. Diese Anordnung ist durch die damit gegebene Doppelverwendung des Lagersitz-Vorsprungs Bs sinnvoll, und besitzt den weiteren Vorteil, dass die im Betrieb der Antriebseinheit Du aufgrund der hohen Kettenzugkräfte bzw. Pedalkräfte auftretenden Verformungen der Tretlagerwelle und/oder des Gehäusedeckels C_{HR} sich auch dem Spulenkörper Bc mitteilen. Dies sorgt dafür, dass der Spulenkörper Bc auch bei hoher Belastung der Antriebseinheit Du weitgehend koaxial mit dem Messkörper, also mit dem Ausgangshohlwellenabschnitt Sos bleibt.

## Patentansprüche

1. Elektrische Fahrrad-Antriebseinheit (Du) zur tretlager-koaxialen Anordnung in einem Tretlagerbereich (D₁) eines Fahrradrahmens (1), die Antriebseinheit (Du) umfassend eine Drehmoment-Sensoreinrichtung (S_{T}) zur Messung eines aus einem linksseitigen Fahrer-Drehmoment (T_{RL}) und einem rechtsseitigen Fahrer-Drehmoment (T_{RR} ) bestehenden Fahrer-Summendrehmoments (T_{R}), eine Tretlagerwelle (S_{B}), eine koaxial zur Tretlagerwelle (S_{B}) angeordnete elektrische Motoreinrichtung (M_{E}), eine Ausgangshohlwelle (So) zur Übertragung eines Motordrehmoments (T_{M}) und des Fahrer-Summendrehmoments (T_{R}) auf einen Fahrrad-Antriebsstrang (3) sowie eine Fahrermoment-Einkopplungseinrichtung (D_{CR}) zur Einkopplung des Fahrer-Drehmoments (T_{R}) von der Tretlagerwelle (S_{B}) auf die Ausgangshohlwelle (So) und eine Motormoment-Einkopplungseinrichtung (D_{CM}) zur Einkopplung des Motor-Drehmoments (T_{M}) auf die Ausgangshohlwelle (So),
**dadurch gekennzeichnet,**
**dass** die Drehmoment-Sensoreinrichtung (S_{T}) in einem von einem Ausgangshohlwellenabschnitt (Sos) definierten axialen Bereich (P_{A}) der Antriebseinheit angeordnet ist, wobei der axiale Bereich (P_{A}) zur Durchleitung sowohl des Fahrer-Summendrehmoments (T_{R}) als auch des Motordrehmoments (T_{M}) eingerichtet ist, und dass die Fahrermoment-Einkopplungseinrichtung (D_{CR}) in dem axialen Bereich (P_{A}) sowie radial innerhalb der Ausgangshohlwelle (So) angeordnet ist, wobei die Drehmoment-Sensoreinrichtung (S_{T}) zur Erfassung einer Durchmesseränderung oder einer Umfangsspannung der Ausgangshohlwelle (So) und/oder der Fahrermoment-Einkopplungseinrichtung (D_{CR}) im Bereich des Ausgangshohlwellenabschnitts (Sos) eingerichtet ist.

2. Antriebseinheit nach Anspruch 1,
**gekennzeichnet durch**
eine zwischen der Motoreinrichtung (M_{E}) und der Motormoment-Einkopplungseinrichtung (D_{CM}) angeordnete Motor-Abtriebshohlwelle (S_{OM}), welche in dem axialen Bereich (P_{A}) koaxial zu dem Ausgangshohlwellenabschnitt (Sos) sowie radial außerhalb des Ausgangshohlwellenabschnitts (Sos) angeordnet und für Magnetfelder durchlässig ausgebildet ist, wobei die Drehmoment-Sensoreinrichtung (S_{T}) zur berührungslosen Erfassung des Fahrer-Summendrehmoments (T_{R}) in dem Ausgangshohlwellenabschnitt (Sos) eingerichtet ist.

3. Antriebseinheit nach Anspruch 1,
**dadurch gekennzeichnet,**
**dass** die Ermittlung des Fahrer-Summendrehmoments (T_{R}) durch Differenzbildung aus einem von der Drehmoment-Sensoreinrichtung (S_{T}) in dem Ausgangshohlwellenabschnitt (Sos) gemessenen Gesamtdrehmoment (T_{T}) und aus dem Motordrehmoment (T_{M}) erfolgt.

4. Antriebseinheit nach einem der Ansprüche 1 bis 3,
**dadurch gekennzeichnet,**
**dass** die Motoreinrichtung (M_{E}) eine Zykloidgetriebeeinrichtung (Gc) oder Dehnwellengetriebeeinrichtung umfasst.

5. Antriebseinheit nach einem der Ansprüche 1 bis 1,
**dadurch gekennzeichnet,**
**dass** die Sensoreinrichtung (S_{T}) eine Spulenanordnung (C _{W1}, C _{W2}, Cws) zur Erfassung materialspannungsabhängiger oder verformungsabhängiger magnetoelastischer Eigenschaften des Ausgangshohlwellenabschnitts umfasst.

6. Antriebseinheit nach Anspruch 5,
**dadurch gekennzeichnet,**
**dass** zumindest eine, vorzugsweise mehrere oder alle Spulen (Cwi, C_{W2}, Cws) der Spulenanordnung durch im Wesentlichen entlang einer Umfangsrichtung verlaufende Drahtwindungen gebildet sind.

## Claims

1. Electric bicycle drive unit (Du) for arrangement in a bottom bracket region (D₁) of a bicycle frame (1), coaxially to the bottom bracket, the drive unit (D_{U}) comprising a torque sensor device (S_{T}) for measuring a rider total torque (T_{R}) consisting of a left-hand rider torque (T_{RL}) and a right-hand rider torque (T_{RR}), a bottom bracket shaft (S_{B}), an electric motor device (M_{E}) arranged coaxially to the bottom bracket shaft (S_{B}), a hollow output shaft (So) for transmitting a motor torque (T_{M}) and the rider total torque (T_{R}) to a bicycle drivetrain (3), and a rider moment coupling device (D_{CR}) for coupling the rider torque (T_{R}) from the bottom bracket shaft (S_{B}) to the hollow output shaft (So), and a motor moment coupling device (D_{CM}) for coupling the motor torque (T_{M}) to the hollow output shaft (So),
**characterized in that**
the torque sensor device (S_{T}) is arranged in an axial region (P_{A}) of the drive unit defined by a hollow output shaft portion (S_{OS}), the axial region (P_{A}) being designed to be passed through by both the rider total torque (T_{R}) and the motor torque (T_{M}) and
that the rider moment coupling device (D_{CR}) is arranged in the axial region (P_{A}) and radially inside the hollow output shaft (S_{O}), the torque sensor device (S_{T}) being designed to detect a change in diameter or a circumferential stress of the hollow output shaft (So) and/or the rider moment coupling device (D_{CR}) in the region of the hollow output shaft portion (Sos).

2. Drive unit according to Claim 1,
**characterized by**
a hollow motor output shaft (S_{OM}) arranged between the motor device (M_{E}) and the motor moment coupling device (D_{CM}), which hollow motor output shaft is arranged in the axial region (P_{A}) coaxially to the hollow output shaft portion (Sos) and radially outside the hollow output shaft portion (Sos) and is designed to be permeable to magnetic fields, the torque sensor device (S_{T}) being designed for contactless detection of the rider total torque (T_{R}) in the hollow output shaft portion (Sos).

3. Drive unit according to Claim 1,
**characterized in that**
the rider total torque (T_{R}) is determined by forming the difference between a total torque (T_{T}) measured by the torque sensor device (S_{T}) in the hollow output shaft portion (Sos) and the motor torque (T_{M}).

4. Drive unit according to one of Claims 1 to 3,
**characterized in that**
the motor device (M_{E}) comprises a cycloidal gear unit (Gc) or expansion shaft gear unit.

5. Drive unit according to one of Claims 1 to 1,
**characterized in that**
the sensor device (S_{T}) comprises a coil arrangement (C _{W1}, C _{W2}, C_{WS}) for detecting material-stress-dependent or deformation-dependent magnetoelastic properties of the hollow output shaft portion.

6. Drive unit according to Claim 5,
**characterized in that**
at least one, preferably a plurality or all of the coils (Cwi, C_{W2}, Cws) of the coil arrangement are formed by wire windings running substantially along a circumferential direction.

## Revendications

1. Unité d'entraînement électrique de bicyclette (D_{U}) destinée à être agencée coaxialement au pédalier dans une zone de pédalier (D₁) d'un cadre de roue de bicyclette (1), l'unité d'entraînement (D_{U}) comprenant un dispositif de détection de couple (S_{T}) pour mesurer un couple total du conducteur (T_{R}) constitué d'un couple du conducteur de gauche (T_{RL}) et d'un couple du conducteur de droite (T_{RR}), un arbre de pédalier (S_{B}), un dispositif de moteur électrique (M_{E}) agencé coaxialement à l'arbre de pédalier (S_{B}), un arbre creux de sortie (S_{O}) pour transmettre un couple de moteur (T_{M}) et le couple total du conducteur (T_{R}) à une chaîne cinématique de bicyclette (3), ainsi qu'un dispositif de couplage du couple du conducteur (D_{CR}) pour coupler le couple du conducteur (T_{R}) de l'arbre de pédalier (S_{B}) à l'arbre creux de sortie (S_{O}) et un moyen de couplage du couple de moteur (D_{CM}) pour coupler le couple de moteur (T_{M}) à l'arbre creux de sortie (S_{O}), **caractérisé en ce que**
le dispositif de détection de couple (S_{T}) est agencé dans une zone axiale (P_{A}) de l'unité d'entraînement définie par une section d'arbre creux de sortie (S_{OS}), la zone axiale (P_{A}) étant adaptée pour faire passer à la fois le couple total du conducteur (T_{R}) et le couple de moteur (T_{M}), et que le dispositif de couplage du couple du conducteur (O_{CR}) est agencé dans la zone axiale (P_{A}) ainsi que radialement à l'intérieur de l'arbre creux de sortie (S_{O}), le dispositif de détection de couple (S_{T}) étant adapté pour détecter une variation de diamètre ou une contrainte circonférentielle de l'arbre creux de sortie (S_{O}) et/ ou du dispositif de couplage du couple du conducteur (O_{CR}) dans la zone de la section d'arbre creux de sortie (S_{OS}).

2. Unité d'entrainement selon la revendication 1,
**caractérisée en ce que**
un arbre creux de sortie de moteur (S_{OM}) agencé entre le dispositif de moteur (M_{E}) et le dispositif de couplage du couple de moteur (D_{CM}), qui est agencé dans la zone axiale (P_{A}) coaxialement à la section d'arbre creux de sortie (S_{OS}) et radialement à l'extérieur de la section d'arbre creux de sortie (S_{OS}) et qui est configuré pour laisser passer les champs magnétiques, le dispositif de détection de couple (S_{T}) étant adapté pour détecter sans contact le couple total du conducteur (T_{R}) dans la section d'arbre creux de sortie (S_{OS}).

3. Unité d'entrainement selon la revendication 1,
**caractérisée en ce que**
la détermination du couple total du conducteur (T_{R}) s'effectue par formation de la différence entre un couple total (T_{R}) mesuré par le dispositif de détection de couple (S_{T}) dans la section d'arbre creux de sortie (S_{OS}) et le couple de moteur (T_{M}).

4. Unité d'entraînement selon l'une quelconque des revendications 1 à 3,
**caractérisée en ce que**
le dispositif de moteur (M_{E}) comprend un dispositif d'engrenage cycloidal (G_{C}) ou un dispositif d'engrenage à arbre expansible.

5. Unité d'entraînement selon l'une quelconque des revendications 1 à 1,
**caractérisée en ce que**
le dispositif de détection (S_{T}) comprend un agencement de bobines (C_{W1}, C_{W2}, C_{W3}) pour détecter les propriétés magnétoélastiques de la section d'arbre creux de sortie qui dépendent de la tension du matériau ou de la déformation.

6. Unité d'entraînement selon la revendication 5,
**caractérisée en ce que**
qu'au moins une, de préférence plusieurs ou toutes les bobines (C_{W1}, C_{W2}, C_{W3}) de l'agencement de bobines sont formées par des enroulements de fil s'étendant essentiellement le long d'une direction circonférentielle.
